(19) Europäisches Patentamt
European Patent Office
Office européen des brevets

(11) Publication number: 0 204 453
A1

(12) # EUROPEAN PATENT APPLICATION

(21) Application number: 86303727.1

(22) Date of filing: 15.05.86

(51) Int. Cl.⁴: C 08 L 33/08
C 08 L 23/04

(30) Priority: 21.05.85 US 736547

(43) Date of publication of application:
10.12.86 Bulletin 86/50

(84) Designated Contracting States:
AT BE CH DE FR GB IT LI LU NL SE

(71) Applicant: BP Chemicals Limited
Belgrave House 76 Buckingham Palace Road
London, SW1W 0SU(GB)

(72) Inventor: Anzini, David Joseph BP Performance Polymers Inc.
Newburg Road P.O. Box 400
Hackettstown New Jersey 07840(US)

(72) Inventor: Shedd, Charles Dains BP Performance Polymers Inc.
Newburg Road P.O. Box 400
Hackettstown New Jersey 07840(US)

(74) Representative: Hymers, Ronald Robson et al,
BP INTERNATIONAL LIMITED Patents Division Chertsey Road
Sunbury-on-Thames Middlesex, TW16 7LN(GB)

(54) **Thermoplastic elastomer compositions.**

(57) A thermoplastic elastomer composition obtainable by blending together and partially curing an acrylate rubber and a polyolefin resin in a weight ratio of acrylate rubber to polyolefin of from 95:5 to 50:50. The compositions may be filled in particular with aluminium trihydrate to provide thermoplastic elastomer compositions having low smoke and flame retardant properties. Such compositions are suitable for use as jacketing for cables.

EP 0 204 453 A1

Croydon Printing Company Ltd

# THERMOPLASTIC ELASTOMER COMPOSITIONS

The present invention relates to thermoplastic elastomer compositions and in particular to thermoplastic elastomer compositions having low smoke and flame retardant properties.

A thermoplastic is usually a linear or branched chain structure which softens and may flow at elevated temperatures. Examples are polyethylene, polystyrene and nylon.

Thermoplastic elastomers can be processed and fabricated by methods used for thermoplastics. US Patent 3,265,765 to Holden et al, and the article by Hartman et al, "Butyl Grafted to Polyethylene Yields Thermoplastic Elastomer", Rubber World, October 1970, pages 59 to 64 disclose thermplastic elastomers made by special block copolymerisation or polymer grafting methods.

US Reissue Patent 31,518 to Fischer discloses thermoplastic elastomer compositions comprising a blend of a monoolefin copolymer rubber and a polyolefin resin. The blend of monoolefin copolymer rubber component and polyolefin resin is made through a dynamic partially curing process. US Patent 4,130,535 to Coran discloses a completely cured blend of olefin rubber and thermoplastic olefin resin.

According to the present invention a thermoplastic elastomer composition comprising a partially cured blend of a rubber and a thermoplastic polyolefin resin is characterised in that the rubber is an acrylate rubber and in that the weight ratio of the acrylate rubber to polyolefin resin is from 95:5 to 50:50.

The invention includes a method for preparing a thermoplastic

elastomer comprising blending an acrylate rubber and a polyolefin resin in a weight ratio of from 95:5 to 50:50 and dynamically curing the blend by dynamically mixing the blend in the presence of an amount of curing agent which is less than the amount required to provide a fully cross-linked composition.

The invention also includes a low smoke and flame retardant thermoplastic elastomer composition comprising an acrylate rubber, a polyolefin resin and aluminium trihydrate, the weight ratio of acrylate rubber to polyolefin resin being from 95:5 to 50:50.

In accordance with the present invention, a thermoplastic elastomer composition comprising an acrylate rubber and a polyolefin resin is provided by dynamically partially curing the blended components with a curing agent wherein the amount of curing agent is less than that required to provide a fully cross-linked composition. The curing agent is contacted with the blended components in amounts sufficient to assure the development of a thermoplastic elastomer which can be molded or otherwise shaped without the necessity for performing an expensive and time consuming vulcanisation step in the shaped article. Moreover, the inventive composition can be reprocessed in a manner typical to thermoplastic materials.

The rubber component of the inventive thermoplastic elastomer can comprise polymers of acrylate esters and copolymers of acrylate esters with ethylene. These polymers can also include a small amount of acrylic acid or other copolymerisable or terpolymerisable acid, to facilitate cross-linking. US Patent 3,904,588 to Greene discloses the preparation of certain acrylate ester rubbers.

The acrylate ester polymers and copolymers are commerically available under the Vamac (DuPont), Cyanacryl (American Cyanamid), and Hycar (B.F. Goodrich) trademarks.

It has also been found that copolymers of ethylene propylene rubbers grafted with acrylic acid can also function as the rubber component.

The ethylene/acrylic elastomer is a copolymer of ethylene and methylacrylate plus a cure site monomer, with a structure as

follows:

$(-CH_2-CH_2-)_x$ 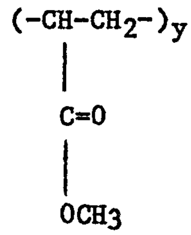 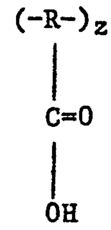

ETHYLENE METHYL ACRYLATE CURE SITE MONOMER

Polyacrylic rubbers of polyacrylate elastomers have two major components. A "backbone" component comprising 95-99% of the polymer, and the "reactive cure site" component comprising 1-5% of the polymer. The copolymers have high molecular weight, typically about 100,000 Mn (viscosity average molecular weight).

The backbone component is made from monomeric acid esters of primarily two types:

(1) Alkyl and (2) Alkoxy

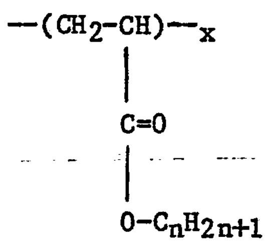

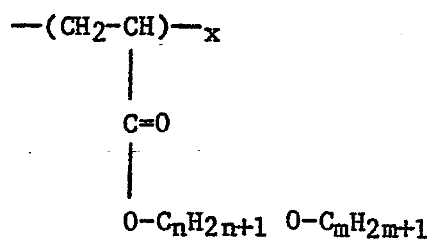

where n=2 = ethyl acrylate

where n=4 = butyl acrylate

where n=2 & M=1 = methoxy ethyl acrylate

where n=2 & m=2 = ethoxy ethyl acrylate

The reactive cure-sites are primarily of three types:

(1) reactive halogen (2) epoxy and (3) carboxyl

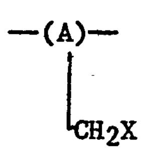

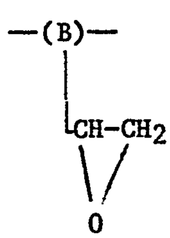

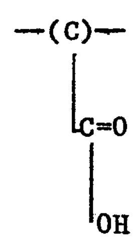

X is a halogen, most commonly chlorine.

for example, 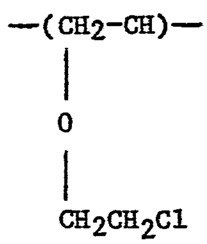 for example 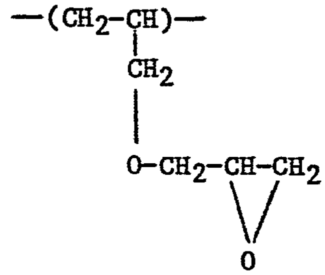 e.g., 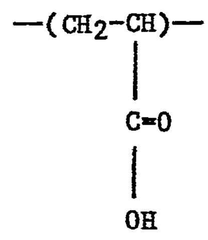

2-chloroethyl vinyl ether   allyl glycidyl ether   acrylic acid

Suitable polyolefin resins with which the acrylate rubber can be mixed to make the blend of the invention comprise crystalline solid high molecular weight resinous plastic material made by polymerising such olefins as ethylene, propylene, 1-butene, 1-pentene, 4-methylpentene, 1-hexene, 2-methyl-1-propene, 3-methyl-1-pentene, 5-methyl-1-hexene and mixtures thereof. Commercially available thermoplastic polyolefin resins, such as polyethylene or polypropylene can be used, including linear polyethylene. Polypropylene is the preferred polyolefin, having highly crystalline isotactic and syndiotactic forms. Crystalline block copolymers of ethylene and propylene, which are plastics distinguished from amorphous, random ethylene-propylene elastomers, can also be used, preferably where the ethylene content does not exceed 20%. Included among the polyolefin resins are the higher alpha-olefin modified polyethylenes and polypropylenes as disclosed in"Polyolefins", N.V. Boenig, (Elsevier Publishing Company, New York, 1966).

The propylene polymers are commercially available under the trademark Pro-fax from Himont, Inc. The molecular weight of these polymers as indicated by melt flow rate can vary from about 20 dg/min. to 0.2 dg/min. melt flow rate.

The polypropylene component can also be optionally grafted with acrylic acid and is commercially available under the trademark Polybond from BP Performance Polymers, Inc.

Fillers such as aluminium trihydrate, hydrated magnesia, or hydrated calcium silicate can also be included in the elastomer

composition. Other fillers which can be used comprise those commonly used in rubber and plastic compounding, such as clays, talcs, carbonates, carbon blacks, hydrates and oxides. Suitable candidates are listed in Rubber World Magazine Blue Book at pp. 253-263 (Lippincott & Peto 1984). The compositions according to the present invention can contain relatively high loadings of fillers and still maintain good physical properties.

When aluminium trihydrate is used as the filler, the thermoplastic elastomer composition of the present invention has a high limiting oxygen index (LOI), and also burns with substantially no visible smoke. The combination of low smoke generation and resistance to burning are very desirable properties for many applications such as insulating cables with a low smoke and flame retardant jacketing, to be used in building construction and in military vehicles.

The curing system used to accomplish the partial cross linking of the acrylate rubber-polyolefin resin can comprise organic peroxides, sulphur, metal alkylates, epoxies, amines, azides, phenolic resin curing agents, metal oxides, quinone derivatives and the like. The particular type of curing agent used depends upon the specific cure site in the polymer and the properties desired in the finished product. Specific examples are disclosed in US Patent 3,284,421 to Breslow and 3,297,674 to Breslow et al. Other suitable curing agents are disclosed in the Encyclopedia of Chemical Technology, Volume 17, Second Edition, (Interscience Publishers, 1968), "Science and Technology of Rubber, edited by F.R. Eirich, Chaperter 7, pp. 2891-335 (Academic Press, 1978,), "Rubber Technology," edited by Maurice Morto, Chapter 2, pp. 19-50 (Van Nostrand Reinhold, 2nd edition 1973) and "Organic Peroxides", Volume 1, Daniel Severn, (Wiley-Interscience), 1970, and in US Reissue Patent 31,518 to Fischer at column 3, line 26 to column 4, line 35, the disclosure of which is incorporated by reference.

As already noted, the amount of elastomeric curing agent or the extent of cross-linking imparted to the acrylate rubber portion of the blend is partial. In general, the amount of elastomeric curing

agent used will depend upon the extent of thermoplasticity desired in the elastomer composition. The elastomeric curing agent can vary from about 1-90%, preferably about 5-75% and more preferably about 10-40% of the amount necessary for a substantially complete cure or cross-linking. The exact amount of elastomer curing agent is determined by the formulator taking into consideration such factors as the final method of fabricating the elastomer and the balance of properties desired for its end use.

In using these limited amounts of curing agents or curatives, the mixing temperature of the blend containing the curing agent and the acrylate rubber-polyolefin resin is selected so that whatever amount of curing agent is employed, it is substantially consumed during the reaction.

As a practical rule of thumb, the effective activation temperature for the curing agent may be taken as the temperature at which at least 95% of the curative has been decomposed to yield free radicals within a 0.5 minute time period. It is preferable to select a curative having an activation temperature above the softening point or crystalline melting point of the polyolefin plastic. This temperature is about 132°C (270°F) for high density polyethylene, and about 168°C (335°F) for polypropylene.

It is also possible to use a curing agent having an activation temperature at or below the softening point of the polyolefin resin. The activation temperature would ordinarily be above 116°C (240°F), preferably about 132°C (270°F). The maximum activation temperature would ordinarily not be more than 232°C (450°F), preferably not greater than 204°C (400°F). The data on the common peroxide curatives, such as 2,5-bis(tert-butylperoxy)-2,5-dimethylhexane ("Peroxide I") and dicumyl peroxide ("Peroxide II") is given in the following table.

| Temp °C(°F | Half-life in toluene Peroxide I | Peroxide II |
|---|---|---|
| 116(240) | 21 hours | 10.2 hours |
| 132(270) | 2 hours | 1.75 hours |
| 168(335) | ca 5 minutes | ca 3 minutes |
| 182(360) | 47 seconds | 22 seconds |
| 199(390) | 7.2 seconds | 3.6 seconds |

In contrast to the half-life data tabulated above, at 182°C(360°F), the time to reach about 95% decomposition for Peroxide I and Peroxide II is approximately 4 minutes and 1 1/2 minutes, respectively.

The dynamic partial cross-linking treatment substantially exhausts the action of the curing agent so that there is little or no tendency for further advancement of cure to take place subsequently. It is also desirable to further insure termination of the action of any remaining cross-linking agent, by adding to the mix, at the end of the dynamic partial curing step, a small amount of a free-radical scavenging agent, such as a stabiliser or antioxidant.

Such stabiliser may be added and mixed in for the last minute or so of mastication. The dynamically partially cured material may be subjected to one or more "refining" passes on a mill, and the stabiliser antioxidant can be added in the course of or just prior to refining.

A complete cure which would change the characteristics of the composition to one that is non-thermoplastic, would defeat the purpose of the invention.

The relative proportions of acrylate elastomer to polyolefin resin can vary over a wider range. The ratio of acrylate elastomer:polyolefin resin can vary from about 95:5 to 50:50, respectively, in parts by weight. The proportion of filler, such as aluminium trihydrate can range from about 0-250 parts, preferably about 100-175 parts of filler per 100 parts of thermoplastic elastomer based upon the sum of the parts of the acrylate rubber and the polyolefin resin.

The elastomeric curing agent can be used alone or in combination with auxiliary substances, such as accelerators, activators, stabilisers, free radical scavenging agents, chain extenders and antioxidants. Such materials, for example, include 2,2-4-trimethyl-1,2-dihydroquinoline, diphenylamine acetone condensate, aldol alpha-naphthylamine, octylated diphenylamine, N-phenyl-N'-cyclohexyl-p-phenylene diamine, 2,6-di-tert-butyl-4-methyl phenol, styrene-resorcinol resin, o-cresol monosulphide, di-p-cresol-2-propane, 2,5-di-tert-amyl hydroquinone, dilauryl-3,3'-thiodipropionate and similar dialkyl thiodipropionates.

Other suitable additives are listed in "Rubber: Natural and Synthetic, "Stern, (Palmerton Publishing Company, New York, 1967), especially at pages 244 - 256; and also "Chemisty and Technology of Rubber", Davis and Blake (Reinhold, New York, 1937).

The partial cure of the elastomeric blend of acrylate rubber and polyolefin resin is accomplished by contacting the blend with amounts of the curing or cross-linking agent that are insufficient for a substantially cross-linked cure.

In addition to insuring that the amount of elastomeric curing or cross-linking agent is less than the amount necessary to effect a full cure or cross-linking, parameters such as the curing temperature, and time of cure are also carefully controlled to insure full activation of the curing agent(s) present in the blend.

The curing temperature for the polyolefin-acrylate rubber elastomer blend can vary from about 71 - 204°C (160-400°F), preferably 104 - 204°C (220-400°F), and most preferably 160 - 204°C (320-400°F). The curing temperatures are limited by the stability of the specific acrylate rubber that is used in the blend. For example, blends of the copolymers of methylacrylate and ethylene with polypropylene cannot be processed at temperatures above about 204°C (400°F) or below about 160°C (320°F). At temperatures above 204°C (400°F), the acrylate degrades and gives off decomposition gases. At temperatures below about 160°C (320°F), the polypropylene cannot be processed because it is close to the melting point of the

polymer.

Typical cure times can vary from about 1 to 30 minutes, preferably about 3 to 20 minutes, depending upon the cure system and temperature utilised. Naturally, the time required for the dynamic partial cure will vary with such parameters as the particular polymers employed in the blend, the kind and amount of curative, and the temperature at which the partial cure is carried out.

To best accomplish the dynamic partial cure, the acrylate rubber, polyolefin resin, and cure system can be contacted on an open roll mill, or in an internal mixer such as a Banbury mixer, or an extruder-mixer or a transfer mixer.

The processability of the acrylate rubber-polyolefin resin blend can be assessed for different applications by examining test specimens for a surface finish smoothness that is substantially free from obvious imperfections. A non-thermoplastic material has an irregular grain and poor definition as well as lack of sharpness. Although these criteria are qualitative, those skilled in the art are readily able to ascertain satisfactory products from those that are unsatisfactory by visual examination and touch.

The processability of the inventive blends can be evaluated by subjecting samples of the blend to such shaping operations as extrusion, injection molding, or compression molding.

Extrusion is the shaping method of choice where long continuous forms, such as hose, window seals, wire coatings, flat sheets, and the like are desired. It is important that the extruded articles have acceptable surface smoothness. Extrudability can be evaluated in accordance with ASTM D 2230.

For satisfactory injection molding, the acrylate rubber-polyolefin resin elastomer material must form in the mold a homogeneous article of uniform strength. The flow viscosity characteristics of such elastomeric blends are adequate to insure filling the mold properly under the operating conditions.

The elastomeric nature of objects shaped from the thermoplastic blend of the present invention can be demonstrated by a low elongation set at break, measured in accordance with ASTM standard

D412.

The thermoplastic nature of the inventive blends can be demonstrated by their reprocessability, especially after repeated extrusion with retention of desirable characteristics.

In processing the inventive blend, it is advantageous to include a lubricant, particularly from the standpoint of improving the extrusion quality of the blend composition. For this purpose, any known lubricant conventionally used in rubber or plastics processing can be used, generally in amounts varying from about 0.2 to 3 parts by weight, preferably about 0.5 to 1 part by weight per 100 parts of the acrylate rubber-polyolefin resin blend.

In processing the acrylate rubber-polyolefin resin blend, it has been found that the use of a three component stabiliser system is uniquely suitable in obtaining a desirable product. The first component of the stabiliser system comprises a high molecular weight multi-functional sterically hindered phenol such as tetrakis [methylene 3-(3',5'-di-tert-butyl-4'- hydroxyphenyl) proprionate] methane, more simply referred to as "tetrakis methane", available from Ciba-Geigy Corp. under the trademark Irganox 1010. The high molecular weight multi-functional sterically hindered phenol functions as an antioxidant and thermal stabiliser.

The second component of the stabiliser system is an alkyl ester of a thiodipropionic acid such as dilauryl thiodipropionate ("DLTDP") which functions as a secondary antioxidant.

The third component of the stabiliser system is a substituted benzotriazole, such as 2- (3'5'-di-tert-butyl-2'-hydroxyphenyl)-5-chlorobenzotriazole available under the trademark Tinuvin 327 from Ciba-Geigy Corp. and functions in the stabiliser system to protect the elastomeric blend against ultraviolet radiation.

The amount of stabiliser system can vary from about 0.5-parts by weight, and more preferably about 1-3 parts by weight of the thermoplastic composition. In the stabiliser system, the ratio of DLTDP to substituted benzotriazole to hindered phenol can vary from about 2-4.5:0.75-1.25:0.75-1.25 and preferably about 4:1:1,

respectively, in parts by weight.

The elastomeric blend of the present invention can be manufactured in a single operation, or in a number of operational steps.

In the single step operation, the acrylate rubber, polyolefin resin and curing agent, and if desired, the filler, are charged at the desired ratio to a suitable mixer such as a Banbury internal mixer, transfer type extruder-mixer, extruder or any device that will enable efficient mastication of the blend at the desired temperature. The blending apparatus can be preheated to reduce the time necessary to reach the processing temperature range.

The blend is then held at the processing temperature while continuing the mixing for a time sufficient to insure that effective partial cure of the blend has been accomplished. During processing, the stabiliser system is then contacted with the blend and processing is continued for a short time, usually for about 1 minute or more in order to thoroughly incorporate the stabiliser in the blend and for the purpose of deactivating any residual curing agent.

In the multi-step process, the acrylate rubber and curing agent are charged to a suitable apparatus wherein partial curing takes place. Thereafter, the partially cured acrylate rubber is blended with the polyolefin resin and other components, as needed.

In the following examples, which serve to illustrate the present invention, all parts and percentages are by weight unless otherwise indicated.

Examples 1 to 11

Various blends of ethylene/methylacrylate elastomer (EMA), aluminium trihydrate (ATH), polypropylene (PP), and an organic peroxide cure system were charged into a Farrel B size Banbury mixer and the ram was dropped. The component proportions for each example of blend are tabulated in Table 1. The Banbury mixer has no auxilliary cooling or heating and is operated in a neutral mode at a speed of 120 rpm, the speed being measured with no load on the mixer. When the batch temperature reached 163°C (325°F), the ram

was raised and the stabiliser system was added. The ram was dropped again. At a batch temperature of 182°C (360°F) the ram was again raised and the batch allowed to turn over for an additional 15 seconds. The batch was then recovered and samples prepared for physical testing were cut from a tape extruded from a laboratory size extruder. The extruder was set to attain a uniform temperature of 190°C (375°F) over its entire length. The tape die on the extruder was also set to a temperature of 190°C (375°F). The extruder was adjusted to operate at a screw speed of 75 rpm. Sample tapes of approximately 0.03 inch thickness were made and tested for tensile strength and elongation at break in accordance with ASTMD-412, limiting oxygen index (LOI) in accordance with ASTMD D-2863 and smoke generation by visual observation. Physical data for each example is tabulated in Table 2.

Table 1

COMPONENTS OF BLEND (PARTS BY WEIGHT)

| Example | EMA (a) | EMA (b) | PP (c) | PP (d) | PP (e) | ATH (f) | PEROXIDE CURE (g) | STABILISER PACKAGE (h) |
|---|---|---|---|---|---|---|---|---|
| 1 | 100 | | 20 | | | 200 | 0.5 | 1.5 |
| 2 | 100 | | | | 30 | 200 | 0.5 | 1.5 |
| 3 | | 100 | 20 | | | 200 | 0.5 | 1.5 |
| 4 | | 100 | | | 30 | 200 | 0.5 | 1.5 |
| 5 | | 100 | 50 | | | 200 | 1.0 | 1.5 |
| 6 | | 100 | 30 | | | 100 | 0.5 | 1.5 |
| 7 | | 100 | 30 | | | 150 | 0.5 | 1.5 |
| 8 | | 100 | 50 | | | 200 | 1.5 | 1.5 |
| 9 | | 100 | 50 | | | 200 | 2.0 | 1.5 |
| 10 | | 100 | | 30 | | 200 | 1.0 | 1.5 |
| 11 | | 100 | | 50 | | 200 | 1.0 | 1.5 |

(a) EMA = ETHYLENE/METHYL ACRYLATE ELASTOMER (VAMAC G)

(c) EMA = ETHYLENE/METHYL ACRYLATE ELASTOMER (VAMAC N-123)

(c) PP = 11 MFR (melt flow rate) POLYPROPYLENE (PROFAX 6301)

(d) PP = 0.2 MFR POLYPROPYLENE (PROFAX 6801)

(e) PP = 11 MFR ACRYLIC ACID GRAFTED POLYPROPYLENE POLYBOND 64-111)

(f) ATH = ALUMINIUM TRIHYDRATE (MARTINAL 710)
(g) PEROXIDE = ORGANIC PEROXIDE (VAROX)
(h) STABILISER SYSTEM = A BLEND OF THE FOLLOWING:
DLTDP (4 parts by weight)
IRGANOX 1010 (1 part by weight.)
TINUVIN (1 part by weight)

Table 2

PHYSICAL PROPERTIES

| Example | TENSILE STRENGTH PSI (a) | ELONGATION AT BREAK (%) (b) | LIMITING OXYGEN INDEX (LOI) (c) | SMOKE GENERATION WHEN BURNING (d) |
|---|---|---|---|---|
| 1 | 641 | 246 | 44 | NO VISIBLE SMOKE |
| 2 | 483 | 225 | 36 | " |
| 3 | 687 | 188 | 44 | " |
| 4 | 741 | 171 | 39 | " |
| 5 | 1029 | 150 | 34 | " |
| 6 | 822 | 125 | 30 | " |
| 7 | 662 | 108 | 34 | " |
| 8 | 841 | 79 | 34 | " |
| 9 | 825 | 75 | 34 | " |
| 10 | 745 | 225 | 34 | " |
| 11 | 950 | 196 | 35 | " |

(a) Tensile Strength - ASTM D-412
(b) Elongation - ASTM D-412
(c) LOI - ASTM D-2863
(d) Visual Observation

Claims

**1.** A thermoplastic elastomer composition comprising a partially cured blend of a rubber and a thermoplastic polyolefin resin characterised in that the rubber is an acrylate rubber and in that the weight ratio of the acrylate rubber to polyolefin resin is from 95:5 to 50:50.

**2.** A thermoplastic elastomer composition as claimed in claim 1 in which the acrylate rubber is selected from the group comprising polymers of acrylic esters, copolymers of acrylic esters with ethylene and copolymers or terpolymers of acrylic esters, acrylic acid or other copolymerisable acid and optionally ethylene.

**3.** A thermoplastic elastomer composition as claimed in claim 2 in which the acrylate moiety of the acrylate rubber comprises a $C_1$ to $C_4$ n-alkyl acrylate.

**4.** A thermoplastic elastomer composition as claimed in claim 1 or claim 2 in which the polyolefin resin comprises a crystalline high molecular weight solid product from the polymerisation of one or more monoolefins selected from the group comprising ethylene, propylene, 1-butene, 1-pentene, 1-hexene,2-methyl-1-propene, 3-methyl-1-pentene, 4-methyl-1-pentene and 5-methyl-1-hexene.

**5.** A thermoplastic elastomer as claimed in claim 4 in which the polyolefin resin is an isotactic polymer of polypropylene or a copolymer of propylene with ethylene.

**6.** A thermoplastic elastomer as claimed in any one of claims 1 to 5 which also comprises a filler selected from the group comprising aluminium trihydrate, hydrated magnesia and hydrated calcium silicate.

7. A thermoplastic elastomer as claimed in claim 6 in which the amount of filler is up to 250 parts by weight per 100 parts of the combined weight of acrylate rubber and polyolefin resin.

8. A method for preparing a thermoplastic elastomer comprising blending an acrylate rubber and a polyolefin resin in a weight ratio of from 95:5 to 50:50 and dynamically curing the blend by dynamically mixing the blend in the presence of an amount of curing agent which is less than the amount required to provide a fully crosslinked composition.

9. A method as claimed in claim 8 in which the amount of curing agent is from 1 to 90 % of the amount necessary to effect a substantially complete cure.

10. A method as claimed in claim 9 in which the amount of curing agent is from 5 to 75 % of the amount necessary to effect a substantially complete cure.

11. A method as claimed in any one of claims 8 to 10 in which the curing agent is an organic peroxide.

12. A method as claimed in any one of claims 8 to 11 in which the composition is cured at a temperature of from 71 to 204°C.

13. A method as claimed in any one of claims 8 to 12 in which a stabiliser system is contacted with the thermoplastic blend during processing, the stabiliser system comprising a hindered phenol, a substituted benzotriazole and an alkyl ester of a thiodipropionic acid.

14. A low smoke and flame retardant thermoplastic elastomer comprising a partially cured blend of ethylene/methyl acrylate, propylene and aluminium trihydrate, the ratio of ethylene/methyl acrylate to propylene being from 95:5 to 50:50 parts by weight and the aluminium trihydrate being present in an amount of up to 250 parts by weight per 100 parts of the total weight of ethylene/methyl acrylate and propylene.

European Patent Office

# EUROPEAN SEARCH REPORT

0204453
Application number

EP 86 30 3727

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 013 084 (UNION CARBIDE)<br>* Claims; page 6, lines 11-18 *<br>--- | 1-14 | C 08 L 33/08<br>C 08 L 23/04 |
| E,P<br>X | EP-A-0 154 453 (BRITISH PETROLEUM)<br>* Claims *<br>----- | 1-14 | |
| | | | TECHNICAL FIELDS SEARCHED (Int. Cl.4) |
| | | | C 08 L |

The present search report has been drawn up for all claims

| Place of search | Date of completion of the search | Examiner |
|---|---|---|
| THE HAGUE | 27-08-1986 | FOUQUIER J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82